(19) Europäisches Patentamt
European Patent Office
Office européen des brevets

(11) **EP 3 577 427 B1**

(12) **EUROPÄISCHE PATENTSCHRIFT**

(45) Veröffentlichungstag und Bekanntmachung des Hinweises auf die Patenterteilung:
**22.11.2023   Patentblatt 2023/47**

(21) Anmeldenummer: **18701242.2**

(22) Anmeldetag: **04.01.2018**

(51) Internationale Patentklassifikation (IPC):
**G01F 1/66** *(2022.01)*

(52) Gemeinsame Patentklassifikation (CPC):
**G01F 1/667; G01F 1/662; G01N 29/024; G01P 5/245;** G01N 2291/017; G01N 2291/02836

(86) Internationale Anmeldenummer:
**PCT/EP2018/000007**

(87) Internationale Veröffentlichungsnummer:
**WO 2018/141469 (09.08.2018 Gazette 2018/32)**

(54) **ULTRASCHALLZÄHLER UND VERFAHREN ZUR ERFASSUNG EINER DURCHFLUSSGRÖSSE**

ULTRASONIC METER AND METHOD FOR SENSING A FLOW VARIABLE

COMPTEUR À ULTRASONS ET PROCÉDÉ D'ACQUISITION D'UNE GRANDEUR DE DÉBIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2017   DE 102017000959**
**26.04.2017   DE 102017004038**

(43) Veröffentlichungstag der Anmeldung:
**11.12.2019   Patentblatt 2019/50**

(73) Patentinhaber: **Diehl Metering GmbH**
**91522 Ansbach (DE)**

(72) Erfinder:
• **MAYLE, Michael**
**91522 Ansbach (DE)**
• **PLOSS, Peter**
**95445 Bayreuth (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
**WO-A1-2014/021846     DE-A1-102009 048 646**
**US-A- 6 044 714        US-A1- 2011 271 769**

• **GERHARD LINDNER: "TOPICAL REVIEW; Sensors and actuators based on surface acoustic waves propagating along solid-liquid interfaces", JOURNAL OF PHYSICS D: APPLIED PHYSICS, INSTITUTE OF PHYSICS PUBLISHING LTD, GB, Bd. 41, Nr. 12, 21. Juni 2008 (2008-06-21) , Seite 123002, XP020133344, ISSN: 0022-3727 in der Anmeldung erwähnt**

EP 3 577 427 B1

**Beschreibung**

Die Erfindung betrifft einen Ultraschallzähler zur Erfassung einer von einem Durchfluss eines Fluids abhängigen Durchflussgröße.

Eine Möglichkeit, einen Durchfluss durch ein Messrohr zu messen, sind Ultraschallzähler. Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflexionen an Wänden oder speziellen Reflektorelementen zu einem zweiten Ultraschallwandler geführt wird. Aus der Laufzeit der Ultraschallwelle zwischen den Ultraschallwandlern bzw. einem Laufzeitunterschied bei einer Vertauschung von Sender und Empfänger kann eine Durchflussgeschwindigkeit durch das Messrohr bestimmt werden.

Auf Grund des beschriebenen Messprinzips sind die gemessenen Laufzeiten abhängig von der Strömungsgeschwindigkeit des Fluids im Bereich des Ausbreitungspfades der Ultraschallwelle. Es wird somit nicht eine tatsächliche mittlere Strömungsgeschwindigkeit erfasst, sondern eine mittlere Strömungsgeschwindigkeit im Bereich des Ausbreitungspfades der Ultraschallwelle. Dies ist problematisch, da die Strömungsgeschwindigkeit in einem Messrohr ortsabhängig ist. Dies wird im Folgenden an dem Beispiel eines zylinderförmigen Messrohrs erläutert, gilt jedoch für alle Rohrquerschnitte.

Bei einer laminaren Strömung, das heißt insbesondere bei niedrigen Strömungsgeschwindigkeiten, kann das Geschwindigkeitsprofil eines zylinderförmigen Messrohres in Abhängigkeit der Radialkoordinate v(r) folgendermaßen beschrieben werden:

$$v(r) = v_{\max}\left(1 - \frac{r^2}{r_0^2}\right)$$

Hierbei ist $v_{\max}$ die maximale axiale Geschwindigkeit im Strömungsprofil, r der Abstand von einer Mittelgerade des Messrohres und $r_0$ der Innenradius des Messrohres. Die Strömungsgeschwindigkeit nimmt somit zum Rand des Messrohres hin ab.

Bei turbulenten Strömungen, das heißt insbesondere bei höheren Strömungsgeschwindigkeiten, kann das Strömungsprofil näherungsweise wie folgt beschrieben werden:

$$v(r) \approx v_{\max}\left(1 - \frac{r^2}{r_0^2}\right)^{\gamma}$$

Der zusätzliche Exponent $\gamma$ kann näherungsweise als 1/7 angenommen werden, wenn die Reynoldszahl für die Strömung zwischen $10^4$ und $10^5$ liegt.

Bei einem bekannten Pfad des Ultraschallstrahls durch das Messrohr kann die Profilform näherungsweise durch Berücksichtigung eines Korrekturfaktors bei der Berechnung des mittleren Durchflusses bzw. der mittleren Durchflussgeschwindigkeit berücksichtigt werden. Dieser kann von der gemessenen Laufzeit bzw. Geschwindigkeit abhängen. Eine entsprechende Berechnung ist jedoch insbesondere dann fehlerbehaftet, wenn die Strömung zwischen einer laminaren und einer turbulenten Strömung umschlagen kann, da hierbei Hysteresen auftreten können, die durch einen solchen Korrekturfaktor nicht abgebildet werden können.

Im Stand der Technik sind mehrere Ansätze bekannt, entsprechende Messfehler zu verringern. Beispielsweise wurden in dem Artikel L.C. Lynnworth, et al. "Ultrasonic flowmeters: Half-century progress report, 1955-2005", Ultrasonics Vol. 44, Supplement 1, December 2006, e1371, Ultraschallzähler offenbart, die mehrere Sender und Empfänger und somit mehrere Ausbreitungspfade für die Ultraschallwellen aufweisen. Dieser Ansatz erhöht jedoch die Komplexität des Ultraschallzählers und somit auch die resultierenden Herstellungskosten.

Die Druckschrift DE 102008049891 B4 schlägt hingegen vor, eine Vorkonditionierung des Flusses vor der Durchflussmessung durchzuführen. Eine entsprechende Vorkonditionierung kann jedoch den Strömungswiderstand des Durchflussmessers erhöhen und erhöht zudem ebenfalls die Komplexität der Messanordnung.

Zum Erreichen eines einfachen Messaufbaus schlägt die Druckschrift US 4735097 A vor, Ultraschallwandler zu nutzen, die außenseitig an dem Messrohr befestigt werden. Diese werden genutzt, um geführte Wellen am Messrohr zu induzieren, wodurch eine geringere

Genauigkeit bei der Anordnung der Ultraschallwandler am Messrohr erforderlich ist.

DE 10 2009 048 646 A1 offenbart ein weiteres Beispiel eines Ultraschallzählers nach dem Stand der Technik.

Der Erfindung liegt die Aufgabe zu Grunde, einen Ultraschallzähler anzugeben, der eine verbesserte Messgenauigkeit ermöglicht und insbesondere weitgehend unempfindlich gegenüber einem Strömungsumschlag zwischen einer laminaren und einer turbulenten Strömung ist.

Die Aufgabe wird erfindungsgemäß durch einen Ultraschallzähler zur Erfassung einer von einem Durchfluss eines Fluids abhängigen Durchflussgröße gemäß Anspruch 1 gelöst. H

Erfindungsgemäß wird vorgeschlagen, eine Anregung von geführten Wellen in dem Messrohr, die, wie später noch genauer erläutert werden wird, zu einer in Ausbreitungsrichtung der geführten Wellen ausgedehnten Abstrahlung einer Kompressionswelle in das Fluid führen können, mit einer großen Anregungsbreite bzw. mit einer Anregung einer geführten Welle mit einer schrägen Ausbreitungsrichtung bzw. einer Abstrahlung über einen Winkelbereich zu kombinieren. Die Kombination dieser Ansätze führt dazu, dass ein möglichst großer Teil des Strömungsprofils im Rahmen der Ultraschallmessung "abgetastet" wird, wodurch automatisch bereits im Rahmen des Messprozesses verschiedene Teile des Strömungsprofils berücksichtigt werden und über deren Strömungsgeschwindigkeit eine Mittelung erfolgt.

Zur Abtastung des Strömungsprofils in Richtung senkrecht zur Längsrichtung des Messrohres wird einerseits vorgeschlagen, einen Ultraschallwandler zu nutzen, der die zur Messung genutzte geführte Wellen über einen Großteil der Breite der Innenfläche der Seitenwand anregt. Somit wird ein relativ großer Teil der Breite der Seitenwand und, beispielsweise im Fall eines rechteckigen Messrohres, des gesamten Strömungsprofils, berücksichtigt. Als Breite der Innenfläche ist hierbei die Ausdehnung der Innenfläche senkrecht zur Längsrichtung des Messrohrs, insbesondere im Bereich des jeweiligen Ultraschallwandlers, zu verstehen. Ergänzend oder alternativ kann die geführte Welle gewinkelt zu der Längsrichtung des Messrohres angeregt werden. Da die Seitenwände gewinkelt, insbesondere senkrecht, zueinander stehen, wird eine geführte Welle die sich entlang einer der Seitenwände ausbreitet, am seitlichen Rand dieser Seitenwand, an der diese gewinkelt an eine weitere Seitenwand stößt, zumindest teilweise reflektiert. Dies führt dazu, dass die geführte Welle zick-zack-förmig entlang jener Seitenwand verläuft, an der der anregende Ultraschallwandler angeordnet ist. Dies führt dazu, dass der Verlauf des Strömungsprofils über die gesamte Breite der Seitenwand senkrecht zur Längsrichtung des Messrohres die Laufzeit zwischen den Ultraschallwandlern beeinflussen und somit berücksichtigt werden kann.

Wesentlich ist hierbei, dass die Anregung von geführten Wellen der Seitenwand dazu führt, dass Kompressionswellen in das Fluid abgestrahlt werden. Als geführte Wellen können insbesondere Lamb-Wellen und/oder Rayleigh-Wellen angeregt werden. Eine Anregung von Lamb-Wellen erfolgt, wenn die Wanddicke mit der Wellenlänge der Transversalwelle des Festkörpers vergleichbar ist. Derartige geführte Wellen sind kombinierte Druck- und Scherwellen und führen somit auch zu Auslenkungen der Innenfläche der Seitenwand in Richtung des Fluids bzw. von dem Fluid weg. Durch diese Auslenkungen werden wiederum Kompressionswellen im Fluid ausgelöst. Der gesamte Bereich, innerhalb dem sich die geführte Welle auf der Seitenwand ausbreitet, kann somit als Anregungsfläche für eine Kompressionsschwingung des Fluids dienen.

Gemeinsam mit der oben erläuterten großen Anregungsbreite bzw. gewinkelten Abstrahlung kann somit eine Ultraschallabstrahlung im Wesentlichen über die gesamte Breite des Messrohrs erreicht werden, womit im Rahmen der Ermittlung der Durchflussgröße das gesamte Strömungsprofil berücksichtigt werden kann. Analoges gilt für den Empfang der Druckwelle an dem anderen Ultraschallwandler. Eine an der Seitenwand einlaufende Druckwelle trägt wiederum zur Anregung einer geführten Welle an der Seitenwand bei, wodurch auch die Empfangsfläche des jeweils empfangenden Ultraschallwandlers durch die Nutzung von induzierten geführten Wellen vergrößert werden kann.

Der Übergang zwischen einer geführten Welle einer Wand und einem angrenzenden Fluid ist beispielsweise in dem Artikel G. Lindner, "Sensors and actuators based on surface acoustic waves propagating along solid-liquid interfaces", Journal of Physics D, Vol. 41, No. 12, 2008, S. 123002, dargestellt und soll im Folgenden nur grob wiedergegeben werden. Breitet sich eine geführte Welle entlang einer ein Fluidvolumen begrenzenden Wand aus, so wird eine Kompressionswelle unter dem sogenannten Rayleigh-Winkel, dessen Sinus von dem Verhältnis der Schallgeschwindigkeit in dem Fluid zu der Phasengeschwindigkeit der in der Wand geführten Welle abhängt, in das Fluid abgestrahlt. Werden nun Laufzeiten zwischen dem ersten und dem zweiten Ultraschallwandler gemessen und der Laufzeitunterschied zwischen den beiden Transportrichtungen berechnet, so ergibt sich für den Laufzeitunterschied für einen einzelnen Ultraschallstrahl, der durch die geführte Welle ausgelöst wurde, der folgende Zusammenhang:

$$\Delta t = \int \left( \frac{1}{c_f - v_p(l)} - \frac{1}{c_f + v_p(l)} \right) dl \approx \frac{2L\overline{v_p}}{c_f^2}$$

Hierbei ist $c_f$ die Schallgeschwindigkeit in dem Fluid, $v_p$ (l) die Geschwindigkeit des Fluids parallel zur Strahlrichtung an der Stelle l entlang des Ultraschallstrahls, L die Gesamtlänge des Pfades des Ultraschallstrahls in dem Fluid und $\overline{v_p}$ die entlang des Pfades gemittelte Strömungsgeschwindigkeit des Fluids parallel zur Strahlausbreitungsrichtung. Die näherungsweise Lösung geht davon aus, dass die Schallgeschwindigkeit im Medium wesentlich größer als die Flussgeschwindigkeit parallel zur Strahlausbreitungsrichtung ist.

Durch Umstellen dieser Gleichung kann somit $\overline{v_p}$ aus dem ermittelten Laufzeitunterschied berechnet werden und somit auch die über den Strahlpfad gemittelte Strömungsgeschwindigkeit in die Längsrichtung des Messrohres. Würde davon ausgegangen, dass diese gleich der tatsächlichen mittleren Strömungsgeschwindigkeit ist, könnte ein Durchflussvolumen durch eine Multiplikation dieser Größe mit der Innenfläche des Messrohres berechnet werden. Da dies wie eingangs erläutert bei einer Nutzung einzelner Messstrahlen jedoch nicht der Fall ist, wird typischerweise ein zusätzlicher Kalibrierungsfaktor genutzt, der von der mittleren Geschwindigkeit entlang des Messstrahles und der Pfadlänge abhängen kann.

In dem erfindungsgemäßen Verfahren geht die oben erläuterte Integration über einen Messpfad in eine Integration über ein Messvolumen über bzw. es erfolgt zusätzlich eine Integration über die Anregungsfläche und die von dieser ausgesendeten Messstrahlen. Eine Anregung erfolgt über die gesamte Anregungsbreite sowie über den Ausbreitungspfad der geführten Welle. Somit werden wesentlich größere Teile des Strömungsquerschnitts bei der Ermittlung des Laufzeitunterschieds berücksichtigt, womit die berechnete mittlere Geschwindigkeit $\overline{v_p}$ die mittlere Geschwindigkeit in einem Volumen ist, das einen Großteil des Strömungsquerschnitts berücksichtigt. Die Auswirkungen des Strömungsprofils können somit weit besser berücksichtigt werden.

Der Übergangsbereich zwischen benachbarten, zueinander gewinkelt stehenden Seitenwänden des Messrohrs kann (innen wie außen) in Form einer ausgeprägten Kante ausgeführt sein. Er kann aber auch - mehr oder weniger - abgerundet ausgebildet sein (innen und/oder außen). Die Seitenwände selbst können plan oder (insbesondere nach außen) gewölbt ausgeführt sein, wobei der Krümmungsradius der Wölbung deutlich größer ist als der des Übergangsbereichs, so dass sich der Querschnitt des Messrohrs merklich von einer runden oder elliptischen Form unterscheidet.

Die Innenflächen der Seitenwände, aus denen das Messrohr zusammengesetzt ist, können rechteckig sein oder eine Trapezform aufweisen. Die Trapezform kann insbesondere nur einen geringen Öffnungswinkel gegenüber der rechteckigen Form von 1 bis 2 Grad aufweisen, um den Strömungsquerschnitt des Messrohrs in Durchflussrichtung geringfügig zu vergrößern oder zu verkleinern und somit die Strömung zu stabilisieren. Die Seitenwände können zumindest an ihrer Innenfläche eben sein.

Das Messrohr kann zwei, insbesondere parallele, gegenüberliegende Seitenwände aufweisen (evtl. mit abgerundeten Ecken und/oder nach außen gewölbten Seiten). Der erste und zweite Ultraschallwandler können gemeinsam an einer dieser Seitenwände oder an unterschiedlichen dieser Seitenwände angeordnet sein. Die durch die gegenüberliegenden Seitenwände aufgespannte Querschnittsfläche kann wenigstens 75% der durchströmten Querschnittsfläche des Messrohres sein.

Das Messrohr kann einen rechteckigen Rohrquerschnitt aufweisen. Insbesondere kann der Querschnitt des Messrohrs über die gesamte Rohrlänge oder zumindest in dem Bereich zwischen dem ersten und dem zweiten Ultraschallwandler konstant sein. Wie vorangehend erläutert kann auch eine geringfügige Weitung oder Verengung des Rohrquerschnitts erfolgen, um eine Strömung zu stabilisieren.

Es ist möglich, dass das Wandlerelement oder die Wandlerelemente zur Anregung der geführten Welle verformbar ist oder sind, wobei das Wandlerelement oder die Wanddlerelemente jeweils eine runde oder elliptische Kontaktfläche zur Kopplung mit der Seitenwand aufweist oder aufweisen. Alternativ oder ergänzend können die Wandlerelemente des ersten und/oder des zweiten Ultraschallwandlers linienförmig in parabelförmig konkavem Bogen oder v-förmig angeordnet sein.

Das Wandlerelement kann zur Anregung der geführten Welle verformbar sein und eine rechteckige Kontaktfläche zur Kopplung mit der Seitenwand aufweisen, wobei zwei Seiten der Kontaktfläche senkrecht zu der Ausbreitungsrichtung stehen, wobei die Seitenlänge dieser Seiten der Anregungsbreite entspricht. Das Wandlerelement kann direkt mit der Seitenwand gekoppelt sein, beispielsweise auf diese aufgeklebt sein, oder indirekt über ein Kopplungselement mit der Seitenwand verbunden sein. Das Anregungselement kann beispielsweise ein Piezoaktor sein, der durch eine entsprechende Ansteuerung durch die Steuereinrichtung seine Ausdehnung ändern kann. Beispielsweise kann ein Interdigitaltransducer genutzt werden, der kammartige ineinander greifende Steuerleitungen aufweist, um eine Anregung mit einer bestimmten Anregungsmode zu erreichen.

Die Ausbreitungsrichtung der durch den ersten und/oder zweiten Ultraschallwandler anregbaren geführten Welle kann in einem Winkel zwischen 10 ° und 80 °, insbesondere zwischen 40 ° und 50 ° zu der Längsrichtung des Messrohrs stehen. Durch eine ausreichend große Wahl des Winkels zwischen Ausbreitungsrichtung und Längsrichtung kann erreicht werden, dass auch bei einer relativ starken Dämpfung der geführten Welle in Ausbreitungsrichtung zumindest große Teile der Innenfläche der Seitenwand durch die geführte Welle überstrichen werden, womit eine Anregung von Druckwellen im Fluid über die gesamte Breite der Seitenwand erfolgen kann. Winkel zwischen Ausbreitungsrichtung und Längsrichtung des Messrohres im Bereich von ca. 45 ° sind besonders dann vorteilhaft, wenn, wie später noch genauer erläutert werden wird, geführte Wellen in verschiedene Ausbreitungsrichtungen abgestrahlt werden, um die Abdeckung des Durchflussquerschnitts weiter zu verbessern.

Der vorgegebene Winkelbereich kann 360° sein. Insbesondere kann die geführte Welle gleichmäßig in alle Richtungen in die Seitenwand eingekoppelt werden.

Die Anregungsbreite des ersten und/oder zweiten Ultraschallwandlers kann wenigstens 70 % oder 80 % der Breite der Innenfläche jener Seitenwand sein, an der der jeweilige Ultraschallwandler angeordnet ist. Insbesondere kann die Anregungsbreite gleich der Breite der Innenfläche oder zumindest 90 % hiervon sein. Hierdurch wird selbst bei einer parallel zur Längsrichtung des Messrohres verlaufenden Abstrahlrichtung der geführten Welle erreicht, dass auch die Randbereiche des Strömungsprofils bei der Ermittlung der Signallaufzeit und somit der Durchflussgröße berücksichtigt werden können.

Der erste und/oder zweite Ultraschallwandler können durch die Steuereinrichtung derart ansteuerbar sein, dass gleichzeitig oder zeitversetzt zwei geführte Wellen des Messrohrs mit senkrecht zueinander stehenden Ausbreitungsrichtungen durch den jeweiligen Ultraschallwandler anregbar sind. Somit werden zwei unterschiedliche Ausbreitungspfade für die geführte Welle realisiert und es wird jener Bereich, in dem Druckwellen in das zu messende Fluid abgestrahlt werden, vergrößert. Soweit der jeweilige Ultraschallwandler ein Wandlerelement ist oder umfasst, kann dieses somit, insbesondere unabhängig voneinander, in zwei senkrecht zueinander stehenden Richtungen anregbar sein. Vorzugsweise ist die Wellenlänge der in beide Richtungen abgestrahlten geführten Wellen gleich.

Die Anregungsbreiten für beide durch den Ultraschallwandler anregbaren geführten Wellen können gleich sein. Es kann somit insbesondere ein quadratisches Wandlerelement als Teil des Ultraschallwandlers oder als Ultraschallwandler genutzt werden. Vorzugsweise wird zudem in beide Ausbreitungsrichtungen die gleiche Schwingungsmode angeregt, das heißt, die angeregten geführten Wellen weisen die gleiche Wellenlänge auf.

Die Steuereinrichtung und der erste und/oder zweite Ultraschallwandler können dazu eingerichtet sein, eine Lamb-Welle anzuregen. Dies ist insbesondere dann vorteilhaft, wenn der Ultraschallwandler außerhalb des fluiddurchströmten Innenraums des Messrohrs angeordnet sein soll. Ist die Dicke der Seitenwand vergleichbar mit der Wellenlänge der Transversalwelle des isotropen Festkörpers, so können Lamb-Wellen angeregt werden, welche eine Deformation beider Oberflächen der Seitenwand zur Folge haben. Mit zunehmender Dicke der Seitenwand findet ein kontinuierlicher Übergang zur Anregung von Rayleigh-Wellen (Oberflächenwellen) statt. Eine Amplitude von Oberflächenwellen fällt in dicken Materialien exponentiell mit zunehmender Tiefe ab.

Der erste und/oder zweite Ultraschallwandler können an der Außenseite des Messrohrs angeordnet sein. Insbesondere kann der Innenraum des Messrohrs, also das fluiddurchströmte Volumen, über die gesamte Länge des Messrohrs oder zumindest in einem Messabschnitt zwischen dem ersten und dem zweiten Ultraschallwandler, abgesehen von den das Messrohr begrenzten Seitenwänden, vollständig frei sein. Hierdurch können sehr geringe Strömungswiderstände erreicht werden. Zudem können relativ einfache ausgebildete Ultraschallwandler genutzt werden, da diese nicht gegenüber dem Fluid abgedichtet werden müssen.

Das Fluid kann eine Flüssigkeit, beispielsweise Wasser, ein Gas oder ein Gasgemisch, beispielsweise Erdgas, sein.

Der erste und/oder zweite Ultraschallwandler können durch die Steuereinrichtung derart ansteuerbar sein, dass eine geführte Welle mit genau einer Mode und/oder zwei geführte Wellen mit jeweils genau einer Mode und mit senkrecht zueinander stehenden Ausbreitungsrichtungen anregbar sind. Eine derartige modenselektive Anregung ist vorteilhaft, da der Winkel, in dem eine durch die geführte Welle ausgelöste Druckwelle in das Fluid bezüglich der Ausbreitungsrichtung der geführten Welle abgestrahlt wird, wie eingangs erläutert, von der Phasengeschwindigkeit der geführten Welle und somit typischerweise von deren Anregungsmode abhängt. Am empfangenden Ultraschallwandler würde bei einer Nutzung mehrerer Moden somit eine Überlagerung von Empfangssignalen empfangen werden, die das Fluid mit unterschiedlichen Winkeln bezüglich der Strömungsrichtung durchlaufen haben. Es ist prinzipiell möglich, aus einem derartigen Empfangssignal die Laufzeiten für die einzelnen Moden zu rekonstruieren und unter Umständen sogar zusätzliche Informationen über das Fluid zu gewinnen. Dies erhöht jedoch die Komplexität der Signalauswertung deutlich und kann daher zu einer weniger robusten Messung führen. Vorzugsweise wird somit nur eine einzelne Mode zur Messung benutzt. Eine modenselektive Anregung ist, wie erläutert, beispielsweise durch Interdigitaltransducer möglich. Neben dem erfindungsgemäßen Ultraschallzähler betrifft die Erfindung ein Verfahren zur

trrassung einer von einem Durchfluss eines Fluids abhängigen Durchflussgröße nach Anspruch 14.

Mit dem erfindungsgemäßen Verfahren können die zum erfindungsgemäßen Ultraschallzähler erläuterten Vorteile erreicht werden. Es kann zudem mit Merkmalen weitergebildet werden, die zum erfindungsgemäßen Ultraschallzähler erläutert wurden.

Weitere Vorteile und Einzelheiten der Erfindung ergeben sich aus den folgenden Ausführungsbeispielen sowie den dazugehörigen Zeichnungen. Hierbei zeigen schematisch:

| Figur 1 | ein Ausführungsbeispiel eines erfindungsgemäßen Ultraschallzählers, durch den ein Ausführungsbeispiel des erfindungsgemäßen Verfahrens ausführbar ist, |
|---|---|
| Figuren 2 und 3 | Detailansichten des in Fig. 1 gezeigten Ultraschallzählers aus unterschiedlichen Blickrichtungen, und |
| Figuren 4 bis 9 | Detailansichten von weiteren Ausführungsbeispielen des erfindungsgemäßen Ultraschallzählers. |

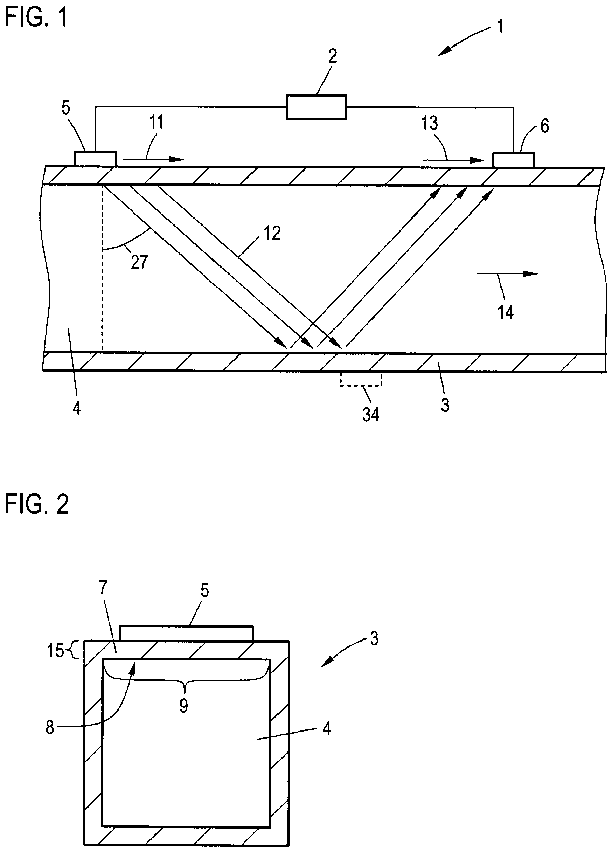

Fig. 1 zeigt einen Ultraschallzähler 1 zur Erfassung einer von einem Durchfluss eines Fluids abhängigen Durchflussgröße. Der Ultraschallzähler 1 weist eine Steuereinrichtung 2, ein Messrohr 3 und einen ersten und zweiten Ultraschallwandler 5, 6 auf. Das Fluid wird in einem Innenraum 4 des Messrohrs 3 in Längsrichtung 14 des Messrohrs 3 geführt.

Um eine Durchflussgröße, insbesondere ein Durchflussvolumen, zu ermitteln, kann durch die Steuereinrichtung 2 eine Laufzeitdifferenz der Signallaufzeit von dem ersten Ultraschallwandler 5 zu dem zweiten Ultraschallwandler 6 und umgekehrt ermittelt werden. Hierbei wird ausgenutzt, dass diese Laufzeit von einer Geschwindigkeitskomponente des Fluids parallel zu einer Ausbreitungsrichtung eines Ultraschallstrahls 12 durch das Fluid abhängt. Aus dieser Laufzeit kann somit eine gemittelte Fluidgeschwindigkeit in Richtung des jeweiligen Ultraschallstrahls 12 über den Pfad des jeweiligen Ultraschallstrahls 12 und somit näherungsweise eine gemittelte Strömungsgeschwindigkeit in dem von dem Ultraschallstrahl 12 durchquerten Volumen ermittelt werden. Problematisch ist bei üblichen Ultraschallzählern, die einen einzelnen Ultraschallstrahl für diese Messung nutzen, dass dieser nur einen sehr kleinen Teil des Strömungsquerschnitts des Messrohres 3 durchquert, womit über Bereiche außerhalb des Ultraschallstrahls 12 keine Informationen vorliegen.

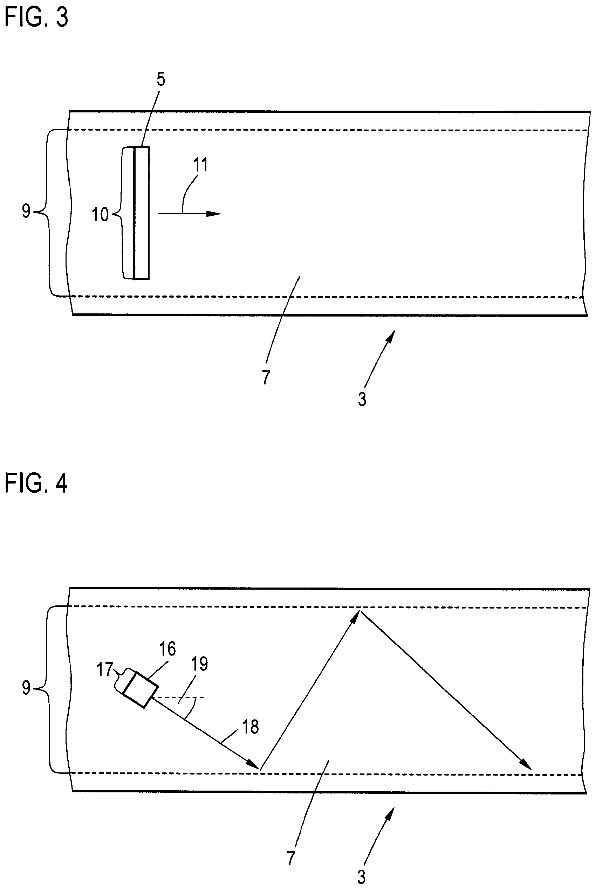

Um dem entgegenzuwirken, wird durch den ersten Ultraschallwandler 5 nicht direkt ein Ultraschallstrahl 12, also eine Druckwelle, in dem Fluid induziert. Stattdessen wird durch den Ultraschallwandler 5 eine schematisch durch ihre Ausbreitungsrichtung 11 dargestellte geführte Welle des Messrohrs 3 bzw. insbesondere der in Fig. 2 gezeigten Seitenwand 7 des Messrohrs 3 angeregt. Hierzu wird ein Ultraschallwandler 5 genutzt, der ein Wandlerelement aufweist, das senkrecht zur Seitenwand 7 und/oder in die Längsrichtung 14 des Messrohres 3 verformbar ist. Das Wandlerelement ist über eine rechteckige Kontaktfläche, deren Abmessung der in Fig. 3 gezeigten Draufsicht des Ultraschallwandlers 5 entsprechen, derart mit der Seitenfläche 7 gekoppelt, dass eine Verformung des Wandlerelements auch zu einer Verformung der Seitenwand im Bereich der Kontaktfläche führt. Die Anregung erfolgt mit einer Frequenz, die derart gewählt ist, dass eine Lamb-Welle in der Seitenwand 7 angeregt wird. Solche Wellen können angeregt werden, wenn die Dicke 15 der Seitenwand 7 vergleichbar mit der Wellenlänge der Transversalwelle des Festkörpers ist, welche sich aus dem Verhältnis der Schallgeschwindigkeit der Transversalwelle des Festkörpers und der angeregten Frequenz ergibt.

Bei einer Lamb-Welle handelt es sich um eine kombinierte Scher- und Druckwelle. Somit resultieren aus der entlang der Seitenwand 7 laufenden geführten Welle eine lokale Verformung der Innenfläche 8 der Seitenwand 7. Aus dieser resultiert wiederum die Abstrahlung einer Druckwelle in das Fluid im gesamten Bereich, innerhalb dem sich die geführte Welle ausbreitet. Dies ist in Fig. 1 schematisch durch die in Längsrichtung 14 beabstandeten Ultraschallstrahlen 12 dargestellt. Die Abstrahlung der entsprechenden Druckwellen erfolgt in dem Rayleigh-Winkel 27, der von der Schallgeschwindigkeit im Fluid und der Phasengeschwindigkeit der geführten Welle abhängt. Für eine bestimmte Anregungsmode resultiert somit bei einem bekannten untersuchten Fluid ein bekannter Abstrahlwinkel. Somit kann, wie bei anderen Ultraschallzählern üblich, auch in diesem Fall eine Signallaufzeit für das Signal ermittelt und hieraus beispielsweise ein Durchfluss berechnet werden. Im Unterschied zu üblichen Durchflusszählern wird hierbei jedoch zusätzlich über den Ausbreitungsabschnitt der geführten Welle entlang der Ausbreitungsrichtung 11 gemittelt.

Empfangsseitig wird ebenfalls das Prinzip der geführten Wellen genutzt. Wie durch den Pfeil 13 angedeutet, wird durch die einlaufenden Druckwellen aus dem Fluid im Bereich des zweiten Ultraschallwandlers 6 eine in Richtung des zweiten Ultraschallwandlers 6 laufende geführte Welle induziert, die durch die Steuereinrichtung über den zweiten Ultraschallwandler 6 erfasst werden kann. Aus dem beschriebenen Vorgehen resultiert somit eine Berücksichtigung der Strömungsgeschwindigkeiten in einem größeren Teil des Messbereichs in dem Messrohr 3 zwischen dem ersten und dem zweiten Ultraschallwandler 5, 6.

Wie in Fig. 2 dargestellt ist, wird ein rechteckiger Rohrquerschnitt des Messrohrs 3 verwendet (wobei die Ecken - innen und/oder außen - mehr oder weniger stark abgerundet ausgeführt sein können). Um auch möglichst große Teile des Strömungsquerschnitts senkrecht zur Ausbreitungsrichtung 11 der geführten Welle zu berücksichtigen, wird ein Ultraschallwandler 5 genutzt, dessen Anregungsbreite sich über einen großen Teil der Breite 9 der Innenfläche 8 jener Seitenwand 7 erstreckt, an der er angeordnet ist. Somit werden auch in Querrichtung des Messrohrs 3 große Teile des Strömungsprofils im Rahmen der Ermittlung der Signallaufzeit und somit beispielsweise der Strömungsgeschwindigkeit bzw. des Volumenflusses mit berücksichtigt.

Fig. 3 zeigt eine äußere Draufsicht auf die Seitenwand 7 des Messrohres 3 im Bereich des Ultraschallwandlers 5. Durch die gestrichelten Linien ist die Breite 9 der Innenfläche 8 der Seitenwand 7 verdeutlicht. Wie in Fig. 3 deutlich zu erkennen ist, wird durch eine Wahl einer ausreichenden Anregungsbreite 10 des Ultraschallwandlers 5 ermöglicht, nahezu das gesamte Strömungsprofil des Fluids im Rahmen der Berücksicht der Signallaufzeit und somit der Durchflussgröße zu berücksichtigen. Zudem ist leicht erkennbar, dass sogar noch größere Anregungsbreiten für den Ultraschallwandler 5 gewählt werden können. Beispielsweise kann die Anregungsbreite 10 sich über die gesamte Breite 9 der Innenfläche 8 oder sogar darüber hinaus erstrecken.

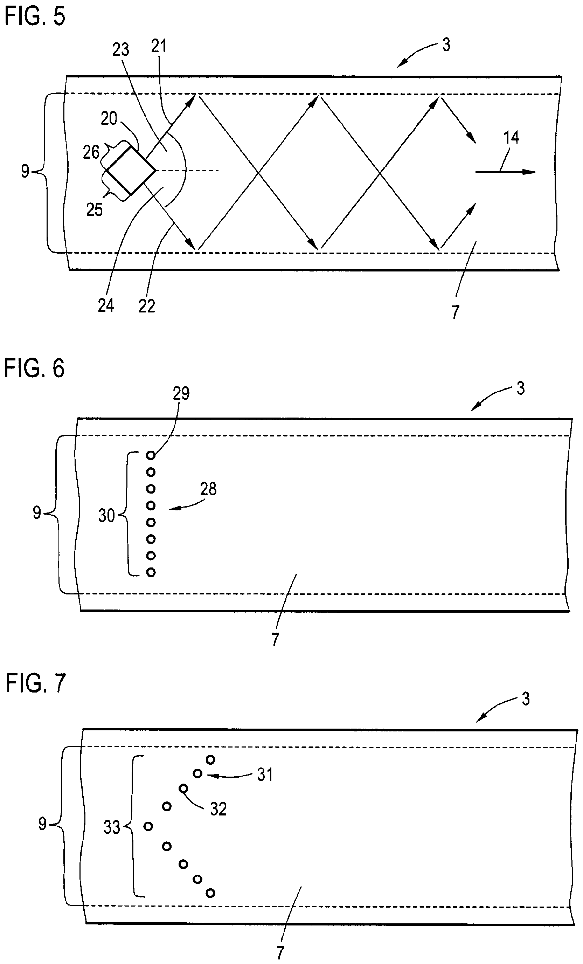

Insbesondere dann, wenn ein Messrohr 3 mit einem großen Rohrquerschnitt verwendet werden soll, kann die Verwendung eines Ultraschallwandlers mit einer ausreichend gro-ßen Breite technisch relativ aufwendig sein. In den folgenden Ausführungsbeispielen, die in Fig. 4 und 5 dargestellt sind, kann jedoch auch in diesen Fällen erreicht werden, dass im Wesentlichen die gesamte Breite des Querschnitts bei der Ermittlung der Signallaufzeit und somit der Durchflussgröße berücksichtigt wird. In dem in Fig. 4 gezeigten Ausführungsbeispiel ist die Anregungsbreite 17 des Ultraschallwandlers 16 deutlich geringer als die Breite 9 der Innenfläche 8 der Seitenwand 7 des Messrohres 3. Um dennoch das Strömungsprofil auf seiner gesamten Breite 9 zu erfassen, wird der Ultraschallwandler 16 so auf der Seitenfläche 7 angeordnet bzw. durch die nicht gezeigte Steuereinrichtung angesteuert, dass eine geführte Welle mit einer Ausbreitungsrichtung 18 abbestrahlt wird, die mit der Längsrichtung 14 den Abstrahlwinkel 19 einschließt. Die geführte Welle bzw. die durch sie ausgelöste Druckwellen in dem Fluid weisen somit eine Ausbreitungsrichtung auf, die gewinkelt zu der Längsrichtung 14 steht. Die geführte Welle bzw. die Druckwellen breiten sich somit bis zur den seitlichen Seitenwänden des Messrohres 3 aus, werden an diesen reflektiert und ändern ihre Ausbreitungsrichtung. Die Breite 9 wird somit durch die zwischen den seitlichen Seitenwänden reflektierenden Druckwellen bzw. die zwischen diesen reflektierte geführte Welle überstrichen.

Um die Messgenauigkeit des Ultraschallzählers zu verbessern, kann optional eine zusätzliche Laufzeitmessung mit Hilfe eines weiteren Ultraschallwandlers 34 durchgeführt werden. Dieser kann, wie in Fig. 1 dargestellt ist, z. B. an einer dem Ultraschallwandler 5 gegenüberliegenden Seitenwand angeordnet sein.

Die Abdeckung der Breite 9 bzw. des gesamten Innenraums des Messrohres 3 kann weiter verbessert werden, wenn, wie in Fig. 5 gezeigt, ein Ultraschallwandler 20 verwendet wird, der durch die Steuereinrichtung derart angesteuert wird, dass gleichzeitig oder zeitversetzt zwei geführte Wellen mit senkrecht zueinander stehenden Ausbreitungsrichtungen 21, 22 abgestrahlt werden. Diese geführten Wellen können vorzugsweise mit einem jeweiligen Abstrahlwinkel 23, 24 zu einer Längsrichtung 14 des Messrohres 3 von ungefähr 45 ° abgestrahlt werden. Hierdurch wird eine symmetrische Ausbreitung erreicht. Die Wellenlänge der abgestrahlten geführten Wellen sowie die Anregungsbreiten 25, 26 sind gleich.

In einem weiteren nicht gezeigten Ausführungsbeispiel wäre es auch möglich, dass ein rechteckiger Ultraschallwandler 20 verwendet wird, dessen Anregungsbreiten 25, 26 voneinander unterschiedlich sind. In diesem Fall können in die beiden Ausbreitungsrichtungen 21, 22 geführte Wellen mit voneinander unterschiedlichen Wellenlängen abgestrahlt werden.

Fig. 6 zeigt eine Detailansicht eines weiteren Ausführungsbeispiels eines Ultraschallzählers. Die Darstellung entspricht weitgehend der in Fig. 3 gezeigten Darstellung, wobei statt dem in Fig. 3 gezeigten Ultraschallwandler 5 mit einem einzelnen breiten, rechteckigen Anregungselement ein Ultraschallwandler 28 genutzt wird, der eine Vielzahl einzelner, insbesondere runder bzw. zylinderförmiger oder auch rechteckiger bzw. quaderförmiger, quadratischer bzw. kubischer oder elliptischer, Wandlerelemente 29 aufweist. Die Wandlerelemente 29 sind linienförmig angeordnet und die Anordnung der Wandlerelemente 29 erstreckt sich über eine Anregungsbreite 30, die nur geringfügig schmaler ist als die Breite 9 der Seitenwand 7.

Im einfachsten Fall können die einzelnen Wandlerelemente 29 mit dem gleichen Steuersignal angesteuert werden, womit eine geführte Welle in der Seitenwand 7 resultiert, die im Wesentlichen in Längsrichtung des Messrohrs 3 verläuft. Es ist jedoch auch möglich, die geführte Welle gewinkelt in die Seitenwand 7 einzukoppeln, beispielsweise indem ein definierter Phasenversatz für die einzelnen Wandlerelemente 29 vorgegeben wird. In einem nicht gezeigten alternativen Ausführungsbeispiel wäre es auch möglich, die linienförmige Anordnung der Wandlerelemente 29 zur Querrichtung des Messrohres 3 gewinkelt anzuordnen, um eine gewinkelte Abstrahlung zur Längsrichtung 14 des Messrohres 3 zu erreichen.

Fig. 7 zeigt eine Variante des in Fig. 6 gezeigten Ausführungsbeispiels. Hierbei wird ein Ultraschallwandler 31 genutzt, dessen Wandlerelemente 32 V-förmig angeordnet sind (eine parabelförmige oder konkave Anordnung ist ebenfalls möglich). Die Anregungsbreite 33 entspricht hierbei wiederum nahezu der Breite 9 der Seitenwand 7. Durch die V-förmige Anordnung wird bei einer gemeinsamen Ansteuerung der Wandlerelemente 32 mit dem gleichen Anregungssignal in Längsrichtung 14 des Messrohres 3 ein Phasenversatz zwischen den verschiedenen abgestrahlten geführten Wellen erreicht, so dass diese derart überlagert werden können, das ein Abstrahlwinkel angepasst wird.

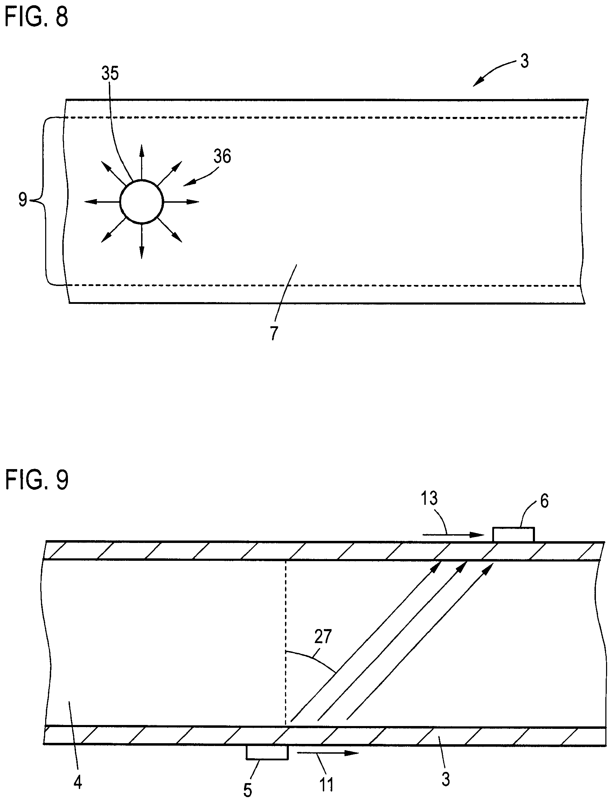

Ein weiteres Ausführungsbeispiel für einen Ultraschallzähler ist in Fig. 8 dargestellt. Hierbei wird ein Ultraschallwandler 35 genutzt, der ein einzelnes, zylinderförmiges Wandlerelement aufweist. Aufgrund der Zylinderform des Wandlerelements erfolgt eine Abstrahlung der geführten Welle in den Winkelbereich 36 von 360°. Mit anderen Worten erfolgt eine Abstrahlung isotrop in alle Raumrichtungen. Durch Reflexionen am Rand der Seitenwand 7, wie mit Bezug auf Fig. 4 erläutert wurde, wird auch hierbei eine Ausbreitung der geführten Welle im Wesentlichen über die gesamte Breite 9 der Seitenwand 7 erreicht, womit auch über die gesamte Breite 9 Schwingungen in das Fluid eingekoppelt werden. Es wird somit ermöglicht, mit geringem technischen Aufwand die Strömungsgeschwindigkeit des Fluids im Wesentlichen im gesamten Strömungsquerschnitt des Messrohres 3 zu berücksichtigen.

Die bisherigen Erläuterungen gingen davon aus, dass eine Laufzeit gemessen wird, nachdem die durch das Fluid geführte Kompressionswelle wenigstens einmal an einer Seitenwand reflektiert wurde. Dies ist jedoch für das erläuterte Messprinzip nicht erforderlich, so dass auch eine Anordnung, wie sie in Fig. 9 gezeigt ist, genutzt werden kann. Die grundsätzliche Struktur entspricht hierbei der in Fig. 1 gezeigten Struktur, wobei der erste und zweite Ultraschallwandler 5, 6 hierbei an einander gegenüberliegenden Seitenwänden angeordnet sind. In einem nicht gezeigten Ausführungsbeispiel wäre es auch möglich, eine solche Anordnung zu nutzen, wobei die Ultraschallwellen während der Ausbreitung durch das Fluid mehrfach an den Seitenwänden reflektiert werden.

Bezugszeichenliste

1    Ultraschallzähler
2    Steuereinrichtung
3    Messrohr
4    Innenraum

5     erster Ultraschallwandler
6     zweiter Ultraschallwandler
7     Seitenwand
8     Innenfläche
9     Breite
10    Anregungsbreite
11    Ausbreitungsrichtung
12    Ultraschallstrahl
13    Pfeil
14    Längsrichtung
15    Dicke
16    Ultraschallwandler
17    Anregungsbreite
18    Ausbreitungsrichtung
19    Abstrahlwinkel
20    Ultraschallwandler
21    Ausbreitungsrichtung
22    Ausbreitungsrichtung
23    Abstrahlwinkel
24    Abstrahlwinkel
25    Anregungsbreite
26    Anregungsbreite
27    Rayleigh-Winkel
28    Ultraschallwandler
29    Wandlerelement
30    Anregungsbreite
31    Ultraschallwandler
32    Wandlerelement
33    Anregungsbreite
34    Ultraschallwandler
35    Ultraschallwandler
36    Winkelbereich

**Patentansprüche**

1. Ultraschallzähler zur Erfassung einer von einem Durchfluss eines Fluids abhängigen Durchflussgröße mit einer Steuereinrichtung (2), einem Messrohr (3), das durch mehrere Seitenwände (7) gebildet ist, wobei zueinander benachbarte Seitenwände gewinkelt zueinander stehen, und das durch das Fluid in einer Längsrichtung (14) des Messrohrs (3) durchströmbar ist, und einem ersten und einem zweiten Ultraschallwandler (5, 6), die in der Längsrichtung (14) voneinander beabstandet an dem Messrohr (3) angeordnet sind, wobei der erste und der zweite Ultraschallwandler (5, 6, 16, 20, 28, 31, 34, 35) jeweils ein Wandlerelement (29, 32) oder eine vorgegebene Anordnung mehrerer Wandlerelemente (29, 32) umfasst, wobei durch die Steuereinrichtung (2) der erste und/oder der zweite Ultraschallwandler (5, 6, 16, 20, 28, 31, 34, 35) ansteuerbar ist oder sind, um eine akustische in einer Seitenwand (7) des Messrohrs (3) geführte Welle anzuregen, die über das Fluid zu dem jeweils anderen Ultraschallwandler (5, 6, 16, 20, 28, 31, 34, 35) führbar und dort durch die Steuereinrichtung (2) zur Ermittlung einer Signallaufzeit erfassbar ist, indem sich die geführte Welle entlang der Seitenwand ausbreitet, wodurch eine Kompressionswelle unter dem Rayleigh-Winkel in das Fluid abgestrahlt wird, **dadurch gekennzeichnet, dass** eine Ausbreitungsrichtung (11, 18, 21, 22) der durch den ersten und/oder zweiten Ultraschallwandler (5, 6, 16, 20, 28, 31, 34, 35) anregbaren geführten Welle gewinkelt zu der Längsrichtung (14) des Messrohres (3) steht und/oder durch den ersten und/oder den zweiten Ultraschallwandler (5, 6, 16, 20, 28, 31, 34, 35) die geführte Welle über einen vorgegebenen Winkelbereich (36) abstrahlbar ist.

2. Ultraschallzähler nach Anspruch 1, **dadurch gekennzeichnet, dass** das Messrohr (3) einen rechteckigen Rohrquerschnitt aufweist.

3. Ultraschallzähler nach Anspruch 1 oder 2, **dadurch gekennzeichnet, dass** das Wandlerelement (29, 31) oder die Wandlerelemente (29, 31) zur Anregung der geführten Welle verformbar ist oder sind, wobei das Wandlerelement (29, 31) oder die Wanddlerelemente (29, 31) jeweils eine runde oder elliptische Kontaktfläche zur Kopplung mit der Seitenwand (7) aufweist oder aufweisen.

4. Ultraschallzähler nach einem der vorangehenden Ansprüche, **dadurch gekennzeichnet, dass** die Wandlerelemente (29, 31) des ersten und/oder des zweiten Ultraschallwandlers (5, 6, 16, 20, 28, 31, 34, 35) linienförmig, parabelförmig, in konkavem Bogen oder v-förmig angeordnet sind.

5. Ultraschallzähler nach Anspruch 1 oder 2, **dadurch gekennzeichnet, dass** das Wandlerelement (29, 31) zur Anregung der geführten Welle verformbar ist und eine rechteckige Kontaktfläche zur Kopplung mit der Seitenwand (7) aufweist, wobei zwei Seiten der Kontaktfläche senkrecht zu der Ausbreitungsrichtung (11, 18, 21, 22) stehen, wobei die Seitenlänge dieser Seiten einer Anregungsbreite (10, 17, 25, 26) entspricht.

6. Ultraschallzähler nach einem der vorangehenden Ansprüche, **dadurch gekennzeichnet, dass** die Ausbreitungsrichtung (11, 18, 21, 22) der durch den ersten und/oder zweiten Ultraschallwandler (5, 6, 16, 20, 28, 31, 34, 35) anregbaren geführten Welle in einem Winkel zwischen 10° und 80°, insbesondere zwischen 40° und 50°, zu der Längsrichtung (14) des Messrohres (3) steht.

7. Ultraschallzähler nach einem der Ansprüche 1 bis 5, **dadurch gekennzeichnet, dass** der vorgegebene Winkelbereich (36) 360° ist.

8. Ultraschallzähler nach einem der vorangehenden Ansprüche, **dadurch gekennzeichnet, dass** die oder eine Anregungsbreite (10, 17, 30, 33) des ersten und/oder des zweiten Ultraschallwandlers (5, 6, 16, 20, 28, 31, 34), über die sich das Wandlerelement (29, 32) oder die Anordnung der Wandlerelemente (29, 32) erstreckt, wenigstens 50% oder wenigstens 70 % oder wenigstens 80 % der Breite (9) einer Innenfläche (8) jener Seitenwand (7) ist, an der der jeweilige Ultraschallwandler (5, 6, 16, 20, 28, 31, 35) angeordnet ist.

9. Ultraschallzähler nach einem der vorangehenden Ansprüche, **dadurch gekennzeichnet, dass** der erste und/oder der zweite Ultraschallwandler (5, 6, 16, 20, 28, 31, 34, 35) durch die Steuereinrichtung (2) derart ansteuerbar sind, dass gleichzeitig oder zeitversetzt zwei geführte Wellen mit senkrecht zueinander stehenden Ausbreitungsrichtungen (21, 22) durch den jeweiligen Ultraschallwandler (20) anregbar sind.

10. Ultraschallzähler nach Anspruch 9, **dadurch gekennzeichnet, dass** die Anregungsbreiten (25, 26) für beide durch den Ultraschallwandler (20) anregbaren geführten Wellen gleich sind.

11. Ultraschallzähler nach einem der vorangehenden Ansprüche, **dadurch gekennzeichnet, dass** die Steuereinrichtung (2) und der erste und/oder der zweite Ultraschallwandler (5, 6, 16, 20, 28, 31, 34, 35) dazu eingerichtet sind, eine Lamb-Welle anzuregen.

12. Ultraschallzähler nach einem der vorangehenden Ansprüche, **dadurch gekennzeichnet, dass** der erste und/oder der zweite Ultraschallwandler (5, 6, 16, 20, 28, 31, 34, 35) an der Außenseite des Messrohres (3) angeordnet sind.

13. Ultraschallzähler nach einem der vorangehenden Ansprüche, **dadurch gekennzeichnet, dass** der erste und/oder der zweite Ultraschallwandler (5, 6, 16, 20, 28, 31, 34, 35) durch die Steuereinrichtung (2) derart ansteuerbar sind, dass eine geführte Welle mit genau einer Mode und/oder zwei geführte Wellen mit jeweils genau einer Mode und mit senkrecht zueinander stehenden Ausbreitungsrichtungen (21, 22) anregbar sind.

14. Verfahren zur Erfassung einer von einem Durchfluss eines Fluids abhängigen Durchflussgröße, wobei ein Ultraschallzähler (1) mit einer Steuereinrichtung (2), einem Messrohr (3), das durch mehrere Seitenwände (7) gebildet wird, wobei zueinander benachbarte Seitenwände (7) gewinkelt zueinander stehen, und das durch das Fluid in einer Längsrichtung (14) des Messrohrs (3) durchströmt wird, und einem ersten und einem zweiten Ultraschallwandler (5, 6, 16, 20, 28, 31, 34, 35), die in der Längsrichtung (14) voneinander beabstandet an dem Messrohr (3) angeordnet sind, wobei der erste und der zweite Ultraschallwandler (5, 6, 16, 20, 28, 31, 34, 35) jeweils ein Wandlerelement (29, 31) oder eine vorgegebene Anordnung mehrerer Wandlerelemente (29, 31) umfasst, verwendet wird, wobei durch die Steuereinrichtung (2) der erste und/oder der zweite Ultraschallwandler (5, 6, 16, 20, 28, 31, 34, 35) angesteuert werden, um eine akustische in einer Seitenwand (7) des Messrohrs (3) geführte Welle anzuregen, die über das Fluid zu dem jeweils anderen Ultraschallwandler (5, 6, 16, 20, 28, 31, 34, 35) geführt und dort durch die Steuereinrichtung (2) zur Ermittlung einer Signallaufzeit erfasst wird, wobei die Durchflussgröße in Abhängigkeit der Signallaufzeit ermittelt wird, indem sich die geführte Welle entlang der Seitenwand ausbreitet, wodurch eine Kompressionswelle unter dem Rayleigh-Winkel in das Fluid abgestrahlt wird, **dadurch gekennzeichnet, dass** die geführte Welle mit einer Ausbreitungsrichtung (11, 18, 21, 22) angeregt wird, die gewinkelt zu der Längsrichtung (14) des Messrohres (3) steht und/oder dass durch den ersten und/oder den zweiten Ultraschallwandler (5, 6, 16, 20, 28, 31, 34, 35) die geführte Welle über einen vorgegebenen Winkelbereich abgestrahlt wird.

15. Verfahren nach Anspruch 14, **dadurch gekennzeichnet, dass** eine Anregungsbreite (19, 17, 25, 26, 30, 33), über die sich das Wandlerelement (29, 31) oder die Anordnung der Wandlerelemente (29, 31) erstreckt, wenigstens 50% der Breite (9) einer Innenfläche (8) jener Seitenwand (7) ist, an der der jeweilige Ultraschallwandler (5, 6, 16, 20, 28, 31, 34, 35) angeordnet ist.

**Claims**

1. Ultrasonic meter for recording a flow quantity dependent on a flow of a fluid, having a control device (2), a measuring tube (3) which is formed by a plurality of side walls (7), wherein mutually adjacent side walls are at an angle to one another, and through which the fluid is able to flow in a longitudinal direction (14) of the measuring tube (3), and a first and a second ultrasound transducer (5, 6) which are arranged at a distance from one another in the longitudinal direction (14) on the measuring tube (3), wherein the first and the second ultrasound transducer (5, 6, 16, 20, 28, 31, 34, 35) each comprises one transducer element (29, 32) or a predetermined arrangement of a plurality of transducer elements (29, 32), wherein the first and/or the second ultrasound transducer (5, 6, 16, 20, 28, 31, 34, 35) is or are drivable by the control device (2) in order to excite an acoustic wave conducted in a side wall (7) of the measuring tube (3), which is able to be conducted via the fluid to the respectively other ultrasound transducer (5, 6, 16, 20, 28, 31, 34, 35) and is able to be recorded there by the control device (2) in order to determine a signal time of flight, by virtue of the conducted wave propagating along the side wall, whereby a compression wave is emitted into the fluid at the Rayleigh angle, **characterized in that** a propagation direction (11, 18, 21, 22) of the conducted wave which is excitable by the first and/or second ultrasound transducer (5, 6, 16, 20, 28, 31, 34, 35) is at an angle to the longitudinal direction (14) of the measuring tube (3), and/or the conducted wave is able to be emitted over a predetermined angle range (36) by the first and/or the second ultrasound transducer (5, 6, 16, 20, 28, 31, 34, 35).

2. Ultrasonic meter according to Claim 1, **characterized in that** the measuring tube (3) has a rectangular tube cross section.

3. Ultrasonic meter according to Claim 1 or 2, **characterized in that** the transducer element (29, 31) or the transducer elements (29, 31) is or are deformable in order to excite the conducted wave, wherein the transducer element (29, 31) or the transducer elements (29, 31) each has or have a round or elliptical contact surface for coupling with the side wall (7).

4. Ultrasonic meter according to any of the preceding claims, **characterized in that** the transducer elements (29, 31) of the first and/or of the second ultrasound transducer (5, 6, 16, 20, 28, 31, 34, 35) are arranged linearly, parabolically, in a concave arc or in a v-shape.

5. Ultrasonic meter according to Claim 1 or 2, **characterized in that** the transducer element (29, 31) is deformable in order to excite the conducted wave and has a rectangular contact surface for coupling with the side wall (7), wherein two sides of the contact surface are perpendicular to the propagation direction (11, 18, 21, 22), wherein the side length of these sides corresponds to an excitation width (10, 17, 25, 26).

6. Ultrasonic meter according to any of the preceding claims, **characterized in that** the propagation direction (11, 18, 21, 22) of the conducted wave which is able to be excited by the first and/or second ultrasound transducer (5, 6, 16, 20, 28, 31, 34, 35) is at an angle between 10° and 80°, in particular between 40° and 50°, with respect to the longitudinal direction (14) of the measuring tube (3).

7. Ultrasonic meter according to any of Claims 1 to 5, **characterized in that** the predetermined angle range (36) is 360°.

8. Ultrasonic meter according to any of the preceding claims, **characterized in that** the or an excitation width (10, 17, 30, 33) of the first and/or of the second ultrasound transducer (5, 6, 16, 20, 28, 31, 34), over which the transducer element (29, 32) or the arrangement of the transducer elements (29, 32) extends, is at least 50% or at least 70% or at least 80% of the width (9) of an internal surface (8) of that side wall (7) on which the respective ultrasound transducer (5, 6, 16, 20, 28, 31, 34, 35) is arranged.

9. Ultrasonic meter according to any of the preceding claims, **characterized in that** the first and/or the second ultrasound transducer (5, 6, 16, 20, 28, 31, 34, 35) are drivable by the control device (2) in such a way that two conducted waves with mutually perpendicular propagation directions (21, 22) are able to be excited simultaneously or with a time offset by the respective ultrasound transducer (20).

10. Ultrasonic meter according to Claim 9, **characterized in that** the excitation widths (25, 26) are the same for both conducted waves which are able to be excited by the ultrasound transducer (20).

11. Ultrasonic meter according to any of the preceding claims, **characterized in that** the control device (2) and the first and/or the second ultrasound transducer (5, 6, 16, 20, 28, 31, 34, 35) are configured to excite a Lamb wave.

12. Ultrasonic meter according to any of the preceding claims, **characterized in that** the first and/or the second ultrasound transducer (5, 6, 16, 20, 28, 31, 34, 35) are arranged on the outer side of the measuring tube (3).

13. Ultrasonic meter according to any of the preceding claims, **characterized in that** the first and/or the second ultrasound transducer (5, 6, 16, 20, 28, 31, 34, 35) are/is drivable by the control device (2) in such a way that a conducted wave with precisely one mode and/or two conducted waves each with precisely one mode and with mutually perpendicular propagation directions (21, 22) are/is able to be excited.

14. Method for recording a flow quantity dependent on a flow of a fluid, wherein an ultrasonic meter (1) having a control device (2), a measuring tube (3) which is formed by a plurality of side walls (7), wherein mutually adjacent side walls (7) are at an angle to one another, and through which the fluid flows in a longitudinal direction (14) of the measuring tube (3), and a first and a second ultrasound transducer (5, 6, 16, 20, 28, 31, 34, 35) which are arranged at a distance from one another in the longitudinal direction (14) on the measuring tube (3), wherein the first and the second ultrasound transducer (5, 6, 16, 20, 28, 31, 34, 35) each comprises one transducer element (29, 31) or a predetermined arrangement of a plurality of transducer elements (29, 31), is used, wherein the first and/or the second ultrasound transducer (5, 6, 16, 20, 28, 31, 34, 35) are driven by the control device (2) in order to excite an acoustic wave conducted in a side wall (7) of the measuring tube (3), which is conducted via the fluid to the respectively other ultrasound transducer (5, 6, 16, 20, 28, 31, 34, 35) and is recorded there by the control device (2) in order to determine a signal time of flight, wherein the flow quantity is determined as a function of the signal time of flight, by virtue of the conducted wave propagating along the side wall, whereby a compression wave is emitted into the fluid at the Rayleigh angle, **characterized in that** the conducted wave is excited with a propagation direction (11, 18, 21, 22) which is at an angle to the longitudinal direction (14) of the measuring tube (3), and/or **in that** the conducted wave is emitted over a predetermined angle range by the first and/or the second ultrasound transducer (5, 6, 16, 20, 28, 31, 34, 35).

15. Method according to Claim 14, **characterized in that** an excitation width (19, 17, 25, 26, 30, 33), over which the transducer element (29, 31) or the arrangement of the transducer elements (29, 31) extends, is at least 50% of the width (9) of an inner surface (8) of that side wall (7) on which the respective ultrasound transducer (5, 6, 16, 20, 28, 31, 34, 35) is arranged.


**Revendications**

1. Compteur à ultrasons destiné à détecter une grandeur de débit dépendant du débit d'un fluide, ledit compteur comprenant un dispositif de commande (2), un tube de mesure (3) qui est formé par une pluralité de parois latérales (7), des parois latérales adjacentes étant placées angulairement l'une par rapport à l'autre, et qui est traversé par le fluide dans une direction longitudinale (14) du tube de mesure (3), et un premier et un deuxième transducteur à ultrasons (5, 6) qui sont disposés sur le tube de mesure (3) à distance l'un de l'autre dans la direction longitudinale (14), le premier et le deuxième transducteur à ultrasons (5, 6, 16, 20, 28, 31, 34, 35) comprenant chacun un élément transducteur (29, 32) ou un ensemble spécifié de plusieurs éléments transducteurs (29, 32), le premier et/ou le deuxième transducteur à ultrasons (5, 6, 16, 20, 28, 31, 34, 35) pouvant être commandé(s) par le dispositif de commande (2) pour générer une onde acoustique qui est guidée dans une paroi latérale (7) du tube de mesure (3) et qui peut être amenée par le fluide à l'autre transducteur à ultrasons (5, 6, 16, 20, 28, 31, 34, 35) où elle peut être détectée par le dispositif de commande (2) afin de déterminer un temps de propagation de signal durant lequel l'onde guidée se propage le long de la paroi latérale, ce qui émet une onde de compression dans le fluide suivant l'angle de Rayleigh, **caractérisé en ce qu'**une direction de propagation (11, 18, 21, 22) de l'onde guidée, qui peut être générée par le premier et/ou le deuxième transducteur à ultrasons (5, 6, 16, 20, 28, 31, 34, 35), est inclinée par rapport à la direction longitudinale (14) du tube de mesure (3) et/ou **en ce que** l'onde guidée peut être émise sur une plage angulaire spécifiée (36) par le premier et/ou le deuxième transducteur à ultrasons (5, 6, 16, 20, 28, 31, 34, 35).

2. Compteur à ultrasons selon la revendication 1, **caractérisé en ce que** le tube de mesure (3) a une section transversale rectangulaire.

3. Compteur à ultrasons selon la revendication 1 ou 2, **caractérisé en ce que** l'élément transducteur (29, 31) ou les éléments transducteurs (29, 31) est/sont déformable(s) afin de générer l'onde guidée, l'élément transducteur (29, 31) ou les éléments transducteurs (29, 31) ayant chacun une surface de contact ronde ou elliptique destinée à s'accoupler avec la paroi latérale (7).

4. Compteur à ultrasons selon l'une des revendications précédentes, **caractérisé en ce que** les éléments transducteurs (29, 31) du premier et/ou du deuxième transducteur à ultrasons (5, 6, 16, 20, 28, 31, 34, 35) sont disposés suivant une ligne, une parabole, un arc concave ou une forme en V.

5. Compteur à ultrasons selon la revendication 1 ou 2, **caractérisé en ce que** l'élément transducteur (29, 31) est déformable afin de générer l'onde guidée et présente une surface de contact rectangulaire destinée à s'accoupler avec la paroi latérale (7), deux côtés de la surface de contact étant perpendiculaires à la direction de propagation (11, 18, 21, 22), la longueur de ces côtés correspondant à une largeur de génération (10, 17, 25, 26).

6. Compteur à ultrasons selon l'une des revendications précédentes, **caractérisé en ce que** la direction de propagation (11, 18, 21, 22) de l'onde guidée pouvant être générée par le premier et/ou le deuxième transducteur à ultrasons (5, 6, 16, 20, 28, 31, 34, 35) forme un angle compris entre 10° et 80°, notamment entre 40° et 50°, avec la direction longitudinale (14) du tube de mesure (3).

7. Compteur à ultrasons selon l'une des revendications 1 à 5, **caractérisé en ce que** la plage angulaire spécifiée (36) est de 360°.

**8.** Compteur à ultrasons selon l'une des revendications précédentes, **caractérisé en ce que** la ou une largeur de génération (10, 17, 30, 33) du premier et/ou du deuxième transducteur à ultrasons (5, 6, 16, 20, 28, 31, 34), sur laquelle l'élément transducteur (29, 32) ou l'ensemble des éléments transducteurs (29, 32) s'étend, représente au moins 50 % ou au moins 70 % ou au moins 80 % de la largeur (9) d'une surface intérieure (8) de la paroi latérale (7) sur laquelle le transducteur à ultrasons respectif (5, 6, 16, 20, 28, 31, 34, 35) est disposé.

**9.** Compteur à ultrasons selon l'une des revendications précédentes, **caractérisé en ce que** le premier et/ou le deuxième transducteur à ultrasons (5, 6, 16, 20, 28, 31, 34, 35) peut/peuvent être commandé(s) par le dispositif de commande (2) de manière à pouvoir générer deux ondes guidées ayant des directions de propagation (21, 22) perpendiculaires l'une à l'autre par le transducteur à ultrasons respectif (20) de manière simultanée ou décalée dans le temps.

**10.** Compteur à ultrasons selon la revendication 9, **caractérisé en ce que** les largeurs de génération (25, 26) sont les mêmes pour les deux ondes guidées pouvant être générées par le transducteur à ultrasons (20).

**11.** Compteur à ultrasons selon l'une des revendications précédentes, **caractérisé en ce que** le dispositif de commande (2) et le premier et/ou le deuxième transducteur à ultrasons (5, 6, 16, 20, 28, 31, 34, 35) sont conçus pour générer une onde de Lamb.

**12.** Compteur à ultrasons selon l'une des revendications précédentes, **caractérisé en ce que** le premier et/ou le deuxième transducteur à ultrasons (5, 6, 16, 20, 28, 31, 34, 35) est/sont disposé (s) du coté extérieur du tube de mesure (3).

**13.** Compteur à ultrasons selon l'une des revendications précédentes, **caractérisé en ce que** le premier et/ou le deuxième transducteur à ultrasons (5, 6, 16, 20, 28, 31, 34, 35) peut/peuvent être commandé(s) par le dispositif de commande (2) de manière à pouvoir générer une onde guidée ayant exactement un mode et/ou deux ondes guidées ayant chacune exactement un mode et des directions de propagation (21, 22) perpendiculaires l'une à l'autre.

**14.** Procédé de détection d'une grandeur de débit dépendant du débit d'un fluide, un compteur à ultrasons (1) étant utilisé qui comprend un dispositif de commande (2), un tube de mesure (3) qui est formé par une pluralité de parois latérales (7), des parois latérales (7) adjacentes l'une à l'autre étant inclinées l'une par rapport à l'autre, et qui est traversé par le fluide dans une direction longitudinale (14) du tube de mesure (3), et un premier et un deuxième transducteur à ultrasons (5, 6, 16, 20, 28, 31, 34, 35) qui sont disposés sur le tube de mesure (3) à distance l'un de l'autre dans la direction longitudinale (14), le premier et le deuxième transducteur à ultrasons (5, 6, 16, 20, 28, 31, 34, 35) comprenant chacun un élément transducteur (29, 31) ou un ensemble spécifié de plusieurs éléments transducteurs (29, 31), le premier et/ou le deuxième transducteur à ultrasons (5, 6, 16, 20, 28, 31, 34, 35) étant commandé (s) par le dispositif de commande (2) pour générer une onde acoustique qui est guidée dans une paroi latérale (7) du tube de mesure (3) et qui peut être amenée par le fluide à l'autre transducteur à ultrasons (5, 6, 16, 20, 28, 31, 34, 35) où elle est détectée par le dispositif de commande (2) afin de déterminer un temps de propagation de signal, le débit étant déterminé en fonction du temps de propagation de signal durant lequel l'onde guidée se propage le long de la paroi latérale, ce qui émet une onde de compression dans le fluide suivant l'angle de Rayleigh, **caractérisé en ce que** l'onde guidée est générée avec une direction de propagation (11, 18, 21, 22) qui est inclinée par rapport à la direction longitudinale (14) du tube de mesure (3) et/ou **en ce que** l'onde guidée peut être émise sur une plage angulaire spécifiée (36) par le premier et/ou le deuxième transducteur à ultrasons (5, 6, 16, 20, 28, 31, 34, 35).

**15.** Procédé selon la revendication 14, **caractérisé en ce qu'**une largeur de génération (19, 17, 25, 26, 30, 33) sur laquelle l'élément transducteur (29, 31) ou l'ensemble des éléments transducteurs (29, 31) s'étend, représente au moins 50 % de la largeur (9) d'une surface intérieure (8) de la paroi latérale (7) sur laquelle le transducteur à ultrasons respectif (5, 6, 16, 20, 28, 31, 34, 35) est disposé.

FIG. 1

FIG. 2

FIG. 3

FIG. 4

FIG. 5

FIG. 6

FIG. 7

FIG. 8

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008049891 B4
- US 4735097 A
- DE 102009048646 A1

**In der Beschreibung aufgeführte Nicht-Patentliteratur**

- **L.C. LYNNWORTH et al.** Ultrasonic flowmeters: Half-century progress report, 1955-2005. *Ultrasonics,* Dezember 2006, vol. 44 (1), e1371
- **G. LINDNER.** Sensors and actuators based on surface acoustic waves propagating along solid-liquid interfaces. *Journal of Physics D,* 2008, vol. 41 (12), 123002